(19) Europäisches Patentamt
European Patent Office
Office européen des brevets

(11) **EP 3 443 301 B1**

(12) **EUROPÄISCHE PATENTSCHRIFT**

(45) Veröffentlichungstag und Bekanntmachung des Hinweises auf die Patenterteilung:
**17.02.2021 Patentblatt 2021/07**

(51) Int Cl.:
**G01C 21/32** (2006.01)    **G05D 1/02** (2020.01)

(21) Anmeldenummer: **17712730.5**

(86) Internationale Anmeldenummer:
**PCT/EP2017/056380**

(22) Anmeldetag: **17.03.2017**

(87) Internationale Veröffentlichungsnummer:
**WO 2017/178190 (19.10.2017 Gazette 2017/42)**

(54) **VERFAHREN UND SYSTEM ZUM BESTIMMEN EINER GLOBALEN POSITION EINER ERSTEN LANDMARKE**

METHOD AND SYSTEM FOR DETERMINING A GLOBAL POSITION OF A FIRST LANDMARK

PROCÉDÉ ET SYSTÈME DE DÉTERMINATION D'UNE POSITION GLOBALE D'UN PREMIER REPÈRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.04.2016   DE 102016205964**

(43) Veröffentlichungstag der Anmeldung:
**20.02.2019   Patentblatt 2019/08**

(73) Patentinhaber: **Volkswagen Aktiengesellschaft 38440 Wolfsburg (DE)**

(72) Erfinder:
- **MERFELS, Christian 38102 Braunschweig (DE)**
- **KEKEC, Ugur 30449 Hannover (DE)**

(56) Entgegenhaltungen:
**EP-A1- 2 074 379    DE-A1-102012 208 974**

EP 3 443 301 B1

**Beschreibung**

Die vorliegende Erfindung betrifft ein Verfahren und ein System zum Bestimmen einer globalen Position einer ersten Landmarke.

Das automatische Führen eines Fahrzeugs setzt voraus, dass die Position des Fahrzeugs in jeder Situation genau bekannt ist, wobei insbesondere eine Genauigkeit im Dezimeter- oder Zentimeterbereich erforderlich ist. Typischerweise wird diese Genauigkeit durch serienmäßig verbaute satellitengestützte Positionsbestimmungsverfahren (beispielsweise GPS) nicht erreicht und die Positionsbestimmung mittels dieser Verfahren führt oft zu einem sprunghaften Verhalten des Systems. Zur Lokalisierung des Fahrzeugs können daher kartengestützte Verfahren verwendet werden, bei denen die aktuelle Sensordaten des Fahrzeugs mit bekannten Kartendaten verglichen werden. Da die Kartendaten beispielsweise die genauen Positionen von Landmarken umfassen, kann das Fahrzeug in seiner Umgebung Landmarken erfassen und es kann durch einen Abgleich der Sensordaten mit den Kartendaten die aktuelle Position des Fahrzeugs sehr genau bestimmt werden.

Bei der Erfassung der Kartendaten mit den Landmarken, etwa mittels eines Referenzfahrzeugs, können die Landmarken anhand von Sensoren des Referenzfahrzeugs erkannt und mit einer bestimmten Genauigkeit lokalisiert werden. Durch mehrfache Beobachtung und Ausgleichen von Messfehlern werden ihre Positionen im Koordinatensystem einer Karte bestimmt. Wenn ein Fahrzeug nach der Kartierung an einer Position vorbeifährt, für die eine Karte mit Landmarken vorliegt, so kann die Position des Fahrzeugs relativ zu den Landmarken bestimmt werden. Die Genauigkeit der Landmarkenkarten ist daher für die Genauigkeit der darauf basierenden Lokalisierung eines Fahrzeugs von wesentlicher Bedeutung.

Bei der Kartierung der Landmarken kann insbesondere die Position des Referenzfahrzeugs als bekannt vorausgesetzt werden (*"mapping with known poses"*), wenn darin ein ausreichend genaues Referenzortungssystem vorgesehen ist, durch das, etwa mittels einer Nachprozessierung von Daten eines Satellitensystems, mit ausreichender Genauigkeit die tatsächliche Position des Referenzfahrzeugs zu einem bestimmten Zeitpunkt des Kartierungsvorgangs bestimmt werden kann. Jede erfasste Position einer Landmarke wird nun mit den vorher bestimmten Positionen verknüpft. Zur Kompensation von Unsicherheiten bei der Bestimmung der Position der Landmarken wird eine Ausgleichungsrechnung mittels der Methode der kleinsten Quadrate verwendet. Auf diese Weise werden die Positionen der Landmarken innerhalb des Koordinatensystems der Karte bestimmt.

Bei dem in der DE 10 2004 003 850 A1 vorgeschlagenen Verfahren zur Erkennung von Markierungen auf einer Fahrbahn werden durch einen Laserscanner mehrere Abstandsbilder in einem Erfassungsraum in zeitlicher Folge erfasst, wobei der Erfassungsraum die Fahrbahnoberfläche schneidet. Für erkannte Markierungen werden Lage und Form geschätzt. Es werden insbesondere Fahrbahnmarkierungen erkannt.

Die DE 10 2007 020 791 A1 beschreibt eine Erkennungsvorrichtung für Fahrspurmarkierungen, bei der Daten mittels eines LiDAR-Instruments erfasst werden. Auf Grundlage einer Mittellinienposition, einer Mittellinienform und einer Fahrspurbreite werden periodisch Daten über die Fahrspur extrahiert. Ferner wird eine Nachführung der erkannten Fahrspur bei einem Kurvenverlauf beschrieben.

Die DE 10 2012 208 974 A1 beschreibt ein Verfahren zur Bestimmung von Objekt- und Fahrzeugaufenthaltsorten unter Verwendung einer mathematischen Modellierungstechnik und Messdaten, welche mittels Fahrzeugsensoren aufgenommen werden.

Es ist daher die Aufgabe der vorliegenden Erfindung ein Verfahren und ein System zur Verfügung zu stellen, welche eine Steigerung der Genauigkeit einer Landmarkenkarte ermöglichen, wobei die Landmarkenkarte insbesondere anhand von Daten eines Referenzfahrzeugs erzeugt wird.

Erfindungsgemäß wird diese Aufgabe durch ein Verfahren mit den Merkmalen des Anspruchs 1 und ein System mit den Merkmalen des Anspruchs 10 gelöst. Vorteilhafte Ausgestaltungen und Weiterbildungen ergeben sich aus den abhängigen Ansprüchen.

Entsprechend der Erfindung kann vorteilhafterweise die globale Position der ersten Landmarke mit besonders hoher Genauigkeit bestimmt werden und Messfehler können korrigiert werden.

Die Erfindung beruht darauf, dass nicht nur die Position einer bestimmten Landmarke mehrfach bestimmt wird, um dann, beispielsweise anhand eines Mittelwertes oder nach der Methode der kleinsten Quadrate, eine optimierte Position dieser Landmarke mit verringertem Messfehler zu bestimmen. Stattdessen werden ferner die relativen Positionen mehrerer Landmarken zueinander als Randbedingungen (*"constraints"*) bei der Optimierung berücksichtigt. Durch diese Randbedingungen wird insbesondere verlangt, dass die relative Position und Struktur mehrerer Landmarken zueinander in der resultierenden Landmarkenkarte erhalten bleibt.

Bei bekannten Systemen wird typischerweise eine Landmarke mehrfach erfasst und lokalisiert und die mehreren Messungen dieser einzelnen Landmarke werden verwendet, um unabhängig von anderen Landmarken die genaue Position zu bestimmen. Beispielsweise werden mehrere Bilder erfasst und anhand der Bilder wird jeweils eine Relativposition einer bestimmten Landmarke bestimmt, das heißt eine Position relativ zu dem für das jeweilige Bild mit einer bestimmten Unsicherheit bestimmten Referenzpunkt. Anschließend wird die globale Position der Landmarke in einer Landmarkenkarte anhand der mehreren Relativpositionen bestimmt. Das erfindungsgemäße Verfahren verbessert dieses Vorgehen dadurch, dass die relative Position einer Landmarke zu anderen Landmarken, die ebenfalls detektiert wurden, berücksichtigt wird. Während nämlich die globale Position einer Landmarke im Koordinatensystem der Karte typischerweise mit größerer Ungenauigkeit erfasst werden kann, sind die relativen Positionen der detektierten Landmarken zueinander mit besserer Präzision bestimmbar. Durch eine Kombination dieser Daten ergibt sich insgesamt eine größere Anzahl von Bedingungen für die Bestimmung der globalen Position und daher ein deutlicher Gewinn an Genauigkeit.

Als "Vermessungsdatensatz" wird erfindungsgemäß eine Gesamtheit von Daten bezeichnet, die eine Erfassung und Lokalisierung von Objekten, insbesondere Landmarken, ermöglichen.

Die Begriffe "erster Vermessungsdatensatz" und "zweiter Vermessungsdatensatz" beziehen sich auf zumindest zwei verschiedene Vermessungsdatensätze. Diese können, müssen aber nicht in einer zeitlichen Folge oder einem bestimmten räumlichen Zusammenhang erfasst worden sein. Insbesondere kann der erste vor dem zweiten oder der zweite vor dem ersten Vermessungsdatensatz erfasst werden. Vorausgesetzt wird lediglich, dass sich die Erfassungsräume, in denen die Vermessungsdatensätze erfasst werden, überlappen. Zudem wird die erste Landmarke in dem überlappenden Bereich erfasst, sodass für diese Landmarke redundante Daten vorliegen. Insbesondere können mehr als die genannten zwei Landmarken erfasst werden und es können mehrere Landmarken in dem Überlappungsbereich mehrfach erfasst werden.

Als "Landmarken" im Sinne der Erfindung werden insbesondere Objekte bezeichnet, die an einer geographischen Position längerfristig vorhanden sind und die bestimmte feste Charakteristika aufweisen. Die Landmarken können insbesondere als Orientierungspunkte verwendet werden.

Bei einer Ausgestaltung des erfindungsgemäßen Verfahrens umfassen die Landmarken eine Fahrbahnmarkierung, einen Pfosten und/oder eine Kante. Dadurch werden vorteilhafterweise relevante und dauerhafte Merkmale von Fahrbahnen berücksichtigt, die bei typischerweise befahrenen Fahrwegen wie Straßen und Wegen, vorhanden sind.

Eine Kante kann etwa bei einem Bauwerk in der Umgebung des Fahrwegs detektiert werden. Als Pfosten im weitesten Sinne werden Objekte mit einer länglichen Ausdehnung in relativ zur Erdoberfläche vertikaler Richtung verstanden. Als Pfosten können etwa Leitpfosten entlang einer Straße, Straßenlaternen, Brückenpfosten, Ampelpfosten oder die Pfosten von Verkehrsschildern erkannt werden. Pfosten weisen typischerweise vorteilhafte Eigenschaften als Orientierungspunkte auf, etwa wenn sie wegen einer größeren Höhe Hindernisse überragen, wenn sie aus der Entfernung erfassbar sind oder wenn sie wegen klar definierter Umrisse leicht erkennbar und präzise lokalisierbar sind. Ein Vorteil von Fahrbahnmarkierungen liegt darin, dass sie auf der Fahrbahn, zumindest in einem Bereich unmittelbar um das Fahrzeug herum, gewöhnlicher Weise leicht erfassbar sind, wenn sie nicht gerade von einem Objekt, etwa Schnee oder einer Schmutzschicht, überdeckt sind.

Die genannten Beispiele weisen auch die für Landmarken vorteilhafte Eigenschaft auf, dass sie in bestimmtem Maße normiert sind und die Erkennung daher erleichtert wird. Beispielsweise bestehen in den meisten Ländern verkehrsrechtliche Vorschriften über die Form und Anordnung von Fahrbahnmarkierungen, Pfosten und anderen Objekten im Bereich eines Fahrwegs. Streifen auf der Fahrbahn, etwa als Begrenzung einer Fahrspur, weisen durch ihre Form typischerweise eine deutliche Orientierung auf, etwa länglich in Längserstreckungsrichtung der Fahrbahn.

Erfindungsgemäß erfolgt die Bestimmung der Referenzpositionen anhand der gleichen Vermessungsdatensätze wie die Bestimmung der räumlichen Korrelation. Es ist also kein separater Schritt erforderlich, um die räumlichen Korrelationen der Landmarken untereinander zu erfassen. Dies ist ein wesentlicher Vorteil der Erfindung gegenüber bekannten Verfahren.

Bei einer Ausbildung ist jedem Vermessungsdatensatz jeweils ein Zeitpunkt zugeordnet. Dadurch wird vorteilhafterweise sichergestellt, dass die Daten eines Vermessungsdatensatzes im Wesentlichen gleichzeitig erfasst wurden oder als gleichzeitig erfasst angesehen werden können. Insbesondere werden dadurch gleichzeitig die Daten für die räumliche Korrelation und zur Bestimmung der Referenzpositionen erfasst.

Dies ist besonders dann von Vorteil, wenn die räumliche Korrelation von Landmarken anhand des Vermessungsdatensatzes bestimmt wird. Beispielsweise kann anhand eines Kamerabildes bestimmt werden, wie mehrere Landmarken relativ zueinander angeordnet sind. Wenn die Daten einem bestimmten Zeitpunkt zugeordnet sind, kann davon ausgegangen werden, dass die räumliche Korrelation mit der Realität konsistent ist, ohne dass etwa eine aus einer Bewegung der erfassenden Kamera resultierende Veränderung des Koordinatensystems der erfassten Daten die räumliche Korrelation verfälscht. Gegebenenfalls kann eine Vorverarbeitung der erfassten Vermessungsdatensätze erfolgen, um Artefakte, etwa der Erfassung während einer gleichzeitigen Bewegung der Sensoren, zu vermeiden.

Bei einer weiteren Ausbildung wird eine Vielzahl von Vermessungsdatensätzen in zeitlicher Folge erfasst, wobei die den Vermessungsdatensätzen zugeordneten Erfassungsräume entlang einer Trajektorie zueinander verschoben sind. Die erlaubt vorteilhafterweise den Einsatz eines Referenzfahrzeugs zur schrittweisen Erfassung der Daten zur Erstellung einer Karte mit Landmarken während einer Messfahrt.

Dabei kann die Frequenz der Erfassung von Vermessungsdatensätzen während der Bewegung der Referenzfahrzeugs entlang der Trajektorie mit einer bestimmten Geschwindigkeit so gewählt oder angepasst werden, dass die Erfassungsräume eine ausreichend große Überlappung aufweisen und mit hoher Wahrscheinlichkeit Landmarken in einem überlappenden Bereich erfasst werden. Auf diese Weise kann eine große Zahl von Bedingungen für die präzise Bestimmung der globalen Positionen der Landmarken erfasst werden.

Bei einer Weiterbildung umfassen die Vermessungsdatensätze Abstandsinformationen und/oder Bilddaten. Dadurch können vorteilhafterweise die Landmarken leicht erkannt und lokalisiert werden.

Beispielsweise können die Vermessungsdatensätze mittels einer Monokamera, einer *Time-of-Flight*-Kamera, einer Stereokamera, einer *Light-Detection-and-Ranging-* (Lidar)-Vorrichtung und/oder einer *Radio-Detection-and-Ranging-* (Radar)-Vorrichtung erfasst werden. Insbesondere kann eine Kombination mehrerer Verfahren eine besonders gute Erfassung ermöglichen.

Bei einer weiteren Ausgestaltung werden die Referenzpunkte der Vermessungsdatensätze mittels eines satellitengestützten Positionsbestimmungsverfahrens erfasst. Dadurch werden vorteilhafterweise bekannte Verfahren mit der Erfindung verknüpft.

Insbesondere kann mittels des satellitengestützten Positionsbestimmungsverfahrens die Position eines Referenzfahrzeugs an dem Punkt erfasst werden, an dem es einen Vermessungsdatensatz erfasst hat. Diese geographische Position kann als Referenzpunkt dienen, relativ zu dem die Relativpositionen der in dem Vermessungsdatensatz detektierten Landmarken bestimmt werden. Bei der erfindungsgemäßen Zusammenführung der Daten zur Bestimmung der globalen Positionen der Landmarken können dann etwa Ungenauigkeiten bei der Erfassung der Referenzpunkte ausgeglichen werden.

Bei einer Ausbildung des Verfahrens ist der globale Referenzpunkt eine Position eines Ortes der Erdoberfläche. Die bestimmten globalen Positionen der Landmarken können dadurch vorteilhafterweise für die spätere Verwendung bereitgestellt werden, beispielsweise in einer Datenbank, anhand derer ein Fahrzeug beim späteren Erfassen der Landmarken seine eigene Position innerhalb eines geographischen Koordinatensystems auf der Erdoberfläche bestimmen kann.

Bei einer Weiterbildung werden anhand der bestimmten globalen Position Kartendaten erzeugt oder aktualisiert. Dies erlaubt vorteilhafterweise die Erstellung einer Karte mit den globalen Positionen der Landmarken.

Bei einer weiteren Ausbildung umfasst die bestimmte räumliche Korrelation einen Abstand und/oder einen Winkel. Dadurch wird vorteilhafterweise die räumliche Anordnung der Landmarken zueinander eindeutig charakterisiert. Gemäß der Erfindung wird die räumliche Korrelation als Vektor zwischen den bestimmten Relativpositionen der Landmarken bestimmt. Bei dem erfindungsgemäßen Verfahren werden dann die globalen Positionen so bestimmt, dass dieser Vektor der räumlichen Korrelation erhalten bleibt oder nur unter definierten Bedingungen und in definierter Weise verändert wird.

Entsprechend der Erfindung wird die globale Position der ersten Landmarke mittels einer Ausgleichungsrechnung bestimmt. Dies erlaubt vorteilhafterweise die Nutzung bekannter Rechenverfahren zur Bestimmung der präzisen globalen Positionen der Landmarken.

Bei einer Ausgleichungsrechnung, wie sie etwa in der Geodäsie bekannt ist, werden beispielsweise Daten eines Netzes mit einer Vielzahl von Landmarken an bestimmten Positionen in Abhängigkeit von bestimmten Randbedingungen optimiert. Entsprechend der Erfindung wird die bestimmte räumliche Korrelation als Randbedingung für die Ausgleichsrechnung verwendet.

Bei einer weiteren Ausbildung wird mittels der Ausgleichungsrechnung ferner eine zweite globale Position für die zweite Landmarke bestimmt. Durch das Einführen zusätzlicher Randbedingungen gemäß dem erfindungsgemäßen Verfahren wird das Ergebnis der Ausgleichungsrechnung verbessert. Gleichzeitig wird die Erfassung der Randbedingungen anhand gleichzeitig erfasster Landmarken erleichtert und verbessert.

Das erfindungsgemäße System ist ausgebildet, das vorstehend beschriebene erfindungsgemäße Verfahren zu implementieren. Das System weist somit dieselben Vorteile auf wie das erfindungsgemäße Verfahren.

Bei einer Ausbildung des erfindungsgemäßen Verfahrens umfasst die Erfassungseinheit eine Monokamera, eine *Time-of-Flight*-Kamera, eine Stereokamera, eine Lidar-Vorrichtung und/oder eine Radar-Vorrichtung. Somit können vorteilhafterweise Strukturen mittels verschiedener Methoden erfasst werden. Insbesondere können Kombinationen verschiedener Sensoren und Sensortypen verwendet werden. Insbesondere sind Monokameras bereits sehr weit verbreitet und können kostengünstig bereitgestellt werden.

Bei einer weiteren Ausbildung ist das System von einem Fahrzeug umfasst, wobei für jeden Vermessungsdatensatz ferner jeweils eine Position des Fahrzeugs erfassbar ist und die jeweilige erfasste Position des Fahrzeugs dem jeweiligen Vermessungsdatensatz als Referenzpunkt zugeordnet ist. Der Referenzpunkt wird dadurch vorteilhafterweise vom Fahrzeug selbst erfasst, etwa mittels eines satellitengestützten Positionsbestimmungssystems. Die Erfindung wird nun anhand von Ausführungsbeispielen mit Bezug zu den Zeichnungen erläutert.

Figur 1          zeigt eine Fahrbahn mit einem Fahrzeug, das ein Ausführungsbeispiel des erfindungsgemäßen Systems umfasst,

Figuren 2A bis 2E     zeigen beispielhaft räumliche Korrelationen zwischen Landmarken auf einer Fahrbahn und

Figuren 3A bis 3D     zeigen ein Ausführungsbeispiel mit erfassten Relativpositionen von Landmarken, die bei einem Ausführungsbeispiel des erfindungsgemäßen Verfahrens bestimmt wurden.

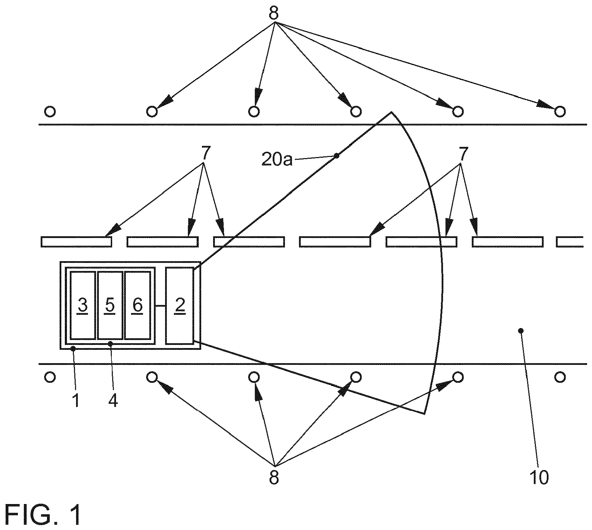

Mit Bezug zu Figur 1 wird ein Fahrzeug mit einem Ausführungsbeispiel des erfindungsgemäßen Systems erläutert.

Ein Fahrzeug 1 befährt eine Fahrbahn 10. Das Fahrzeug 1 umfasst eine Erfassungseinheit 2 und eine mit dieser gekoppelte Recheneinheit 4. Die Recheneinheit 4 umfasst selbst eine Detektionseinheit 3, eine Korrelationseinheit 5 und eine Ausgleichungseinheit 6.

Ferner ist ein Erfassungsraum 20a der Erfassungseinheit 2 angedeutet, der relativ zu der Erfassungseinheit 2 und dem Fahrzeug 1 im Wesentlichen konstant ist und sich mit dem Fahrzeug 1 über die Fahrbahn 10 bewegt. Von besonderer Bedeutung sind Landmarken in der Umgebung des Fahrzeugs 1. In dem dargestellten Beispiel sind am Rand der Fahrbahn 10 Leitpfosten 8 angeordnet und etwa in der Mitte der Fahrbahn 10 Fahrbahnmarkierungen 7 aufgebracht. Ein Teil dieser Landmarken befindet sich in dem dargestellten Fall aktuell im Erfassungsraum 20a.

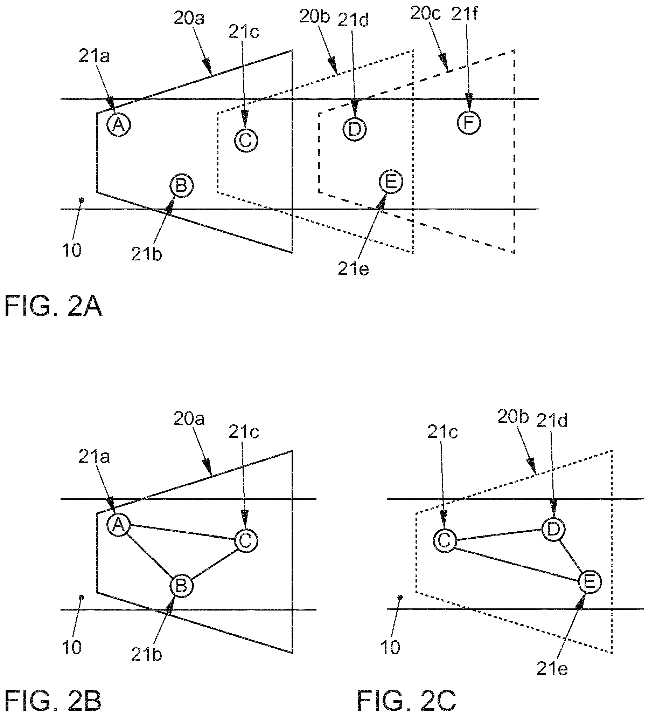

Mit Bezug zu den Figuren 2A bis 2E wird ein Ausführungsbeispiel des erfindungsgemäßen Verfahrens anhand beispielhaft dargestellter räumlicher Korrelationen zwischen Landmarken auf einer Fahrbahn erläutert. Dabei wird von dem oben mit Bezug zu Figur 1 erläuterten Ausführungsbeispiel des erfindungsgemäßen Systems ausgegangen.

Figur 2A zeigt die Fahrbahn 10, auf der Landmarken 21a, 21b, 21c, 21d, 21e, 21f angeordnet sind. Es kann sich in diesem Beispiel etwa um Fahrbahnmarkierungen 7 handeln. Das Fahrzeug 1 bewegt sich entlang der Fahrbahn 10 und erfasst zu drei aufeinander folgenden Zeitpunkten während der Fahrt über die Fahrbahn 10 Vermessungsdatensätze, insbesondere mittels einer *Time-of-Flight-* (ToF)-Kamera. Dabei umfassen die Vermessungsdatensätze insbesondere Bilddaten und Abstandsdaten, etwa für jeden Bildpunkt der Bilddaten. Es werden also in Erfassungsräumen 20a, 20b, 20c entfernungs- und ortsaufgelöste Bilder erfasst. Den auf diese Art erfassten Vermessungsdatensätzen wird jeweils der Zeitpunkt ihrer Erfassung zugeordnet. Die Zeitpunkte der Erfassung der Vermessungsdatensätze und die Geschwindigkeit der Bewegung des Fahrzeugs 1 sind dabei so aufeinander abgestimmt, dass die Erfassungsräume 20a, 20b, 20c einen bestimmten Überlapp aufweisen, sodass bestimmte Bereiche der Fahrbahnoberfläche von den Erfassungsräumen 20a, 20b, 20c zumindest zweier aufeinanderfolgender Vermessungsdatensätze umfasst sind.

Für jeden Vermessungsdatensatz, also beispielsweise für jedes erfasste Bild der ToF-Kamera, wird eine Referenzposition für den jeweiligen Zeitpunkt bestimmt. Diese Referenzposition kann insbesondere einer aktuellen globalen, geographischen Position des Fahrzeugs 1 entsprechen, die etwa anhand von Daten eines GPS-Moduls (nicht dargestellt) der Erfassungseinheit 2 bestimmt wird. Es wird also beispielsweise berücksichtigt, dass sich das Fahrzeug 1 und damit die Erfassungsräume 20a, 20b, 20c zwischen der Erfassung zweier Vermessungsdatensätze bewegt haben.

Anhand der für die Erfassungsräume 20a, 20b, 20c erfassten Vermessungsdatensätze werden mittels der Detektionseinheit 3 die Landmarken 21a, 21b, 21c, 21d, 21e, 21f erkannt und es wird mittels der Recheneinheit 4 ihre Relativposition relativ zu dem jeweiligen Referenzpunkt des Vermessungsdatensatzes bestimmt. Beispielsweise kann durch eine Kalibrierung der Kamera einer bestimmten Position in dem erfassten Bild eine Position relativ zum Fahrzeug zugeordnet werden. Anhand der für das Fahrzeug 1 bestimmten Referenzposition zu diesem Zeitpunkt kann dann eine Relativposition der erkannten Landmarke 21a, 21b, 21c, 21d, 21e, 21f bestimmt werden.

Die Genauigkeit dieser bestimmten Relativposition im Vergleich zu der realen geographischen Position der Landmarke 21a, 21b, 21c, 21d, 21e, 21f auf der Fahrbahnoberfläche hängt insbesondere von der Genauigkeit der Bestimmung des Referenzpunkts, in diesem Fall der Position des Fahrzeugs 1, sowie der Genauigkeit der Positionsbestimmung relativ zum Fahrzeug 1 ab. In dem in den Figuren 2B bis 2D dargestellten Fällen wird von dem Ideal ausgegangen, dass die Landmarken 21a, 21b, 21c, 21d, 21e, 21f genau an ihrer tatsächlichen globalen Position auf der Fahrbahnoberfläche lokalisiert werden. Abweichungen von diesem Ideal und die Anwendung des erfindungsgemäßen Verfahrens zur Korrektur der so entstehenden Fehler werden weiter unten erläutert.

In den Figuren 2B bis 2D wird gezeigt, welche Landmarken 21a, 21b, 21c, 21d, 21e, 21f sich in welchem Erfassungsraum 20a, 20b, 20c befinden. Beispielsweise werden die Landmarken "A", "B" und "C" (21a, 21b, 21c) in einem Erfassungsraum 20a erfasst. Die Landmarke "C" 21c wird zusätzlich in dem in Figur 2C dargestellten Erfassungsraum 20b erfasst. Es können also in dem Beispiel zwei Messungen der Position der Landmarke "C" 21c vorgenommen werden.

Ferner werden mittels der Korrelationseinheit 5 räumliche Korrelationen der Landmarken 21a, 21b, 21c bestimmt, die durch Verbindungslinien zwischen den Landmarken 21a, 21b, 21c angedeutet sind. Insbesondere wird dabei bestimmt, welche Abstände die Landmarken 21a, 21b, 21c zueinander aufweisen und in welchem Winkel die virtuellen Verbindungslinien zueinander verlaufen. Dies kann auf der Fahrbahnoberfläche, die als im Wesentlichen zweidimensional angenommen werden kann, auf besonders einfache Weise bestimmt werden, allerdings erlaubt das erfindungsgemäße Verfahren auch eine Ausweitung auf den dreidimensionalen Raum, etwa zur Bestimmung einer räumlichen Korrelation zwischen einer Fahrbahnmarkierung und einer Ampel in einer bestimmten Höhe oberhalb der Fahrbahn 10.

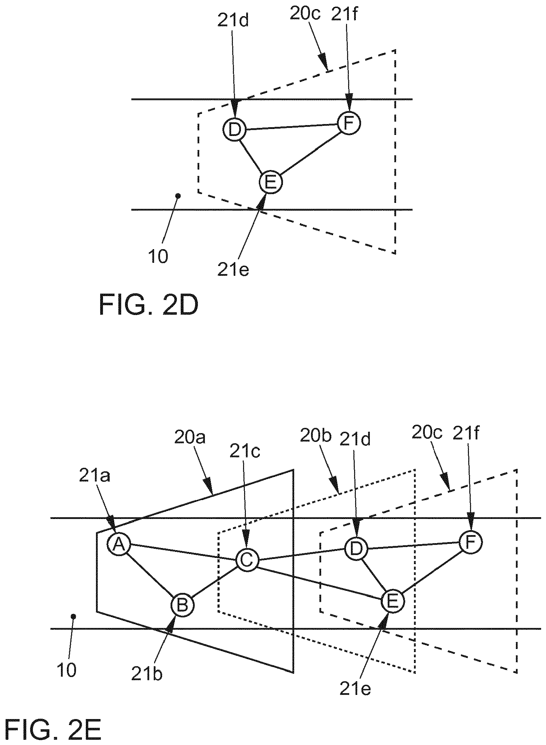

Mithilfe der räumlichen Korrelationen zusammen mit der Überlappung der Erfassungsräume 20a, 20b, 20c ist es möglich, mehrere Vermessungsdatensätze, wie sie schematisch in den Figuren 2B, 2C und 2D dargestellt, zu kombinieren. Eine solche Kombination ist in Figur 2E gezeigt. Dies kann insbesondere anhand der Ausgleichungseinheit 6 erfolgen, wie unten beschrieben, das Kombinieren ist dabei für den dargestellten idealisierten Fall besonders einfach.

Dabei können nunmehr auch Pseudobeobachtungen bestimmt werden, das heißt es können räumliche Korrelationen zwischen Landmarken 21a, 21b, 21c, 21d, 21e, 21f bestimmt werden, die nicht zusammen in einem Vermessungsdatensatz erfasst wurden. Beispielsweise erlauben die in Figur 2E gezeigten Daten Aussagen über die räumliche Korrelation zwischen den Landmarken "A","D" und "F", obwohl diese weder in dem ersten Erfassungsraum 20a (siehe Figur 2B) noch in dem dritten Erfassungsraum 20c (siehe Figur 2D) gemeinsam erfasst worden sind.

Dies definiert eine große Zahl von Nebenbedingungen, wobei vorausgesetzt wird, dass die so bestimmten räumlichen Korrelationen von einer anhand der Vermessungsdatensätze erzeugten Landmarkenkarte wiedergegeben werden sollen. Dabei kann insbesondere davon ausgegangen werden, dass anhand der Vermessungsdatensätze, etwa anhand von Bildern einer Kamera, die räumlichen Korrelationen mit sehr hoher Genauigkeit bestimmt werden können. Insbesondere kann diese Genauigkeit deutlich besser sein als die Genauigkeit der Bestimmung der Referenzposition beziehungsweise der Position des Fahrzeugs 1.

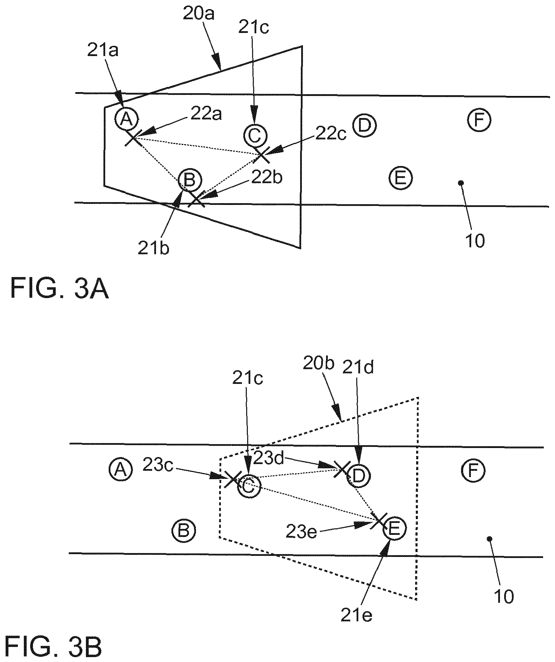

Mit Bezug zu den Figuren 3A bis 3D wird ein Ausführungsbeispiel mit erfassten Relativpositionen von Landmarken, die bei einem Ausführungsbeispiel des erfindungsgemäßen Verfahrens bestimmt wurden, erläutert. Dabei wird von dem oben mit Bezug zu Figur 1 erläuterten Ausführungsbeispiel des erfindungsgemäßen Systems und von dem oben mit Bezug zu den Figuren 2A bis 2E erläuterten Ausführungsbeispiel des erfindungsgemäßen Verfahrens ausgegangen.

Ähnlich wie oben in den Figuren 2B bis 2D gezeigt, werden auch in dem in den Figuren 3A bis 3C dargestellten Fällen Vermessungsdatensätze zu drei aufeinanderfolgenden Zeitpunkten erfasst, während sich das Fahrzeug 1 über die Fahrbahn 10 bewegt. Die Erfassungsräume 20a bis 20c sind entsprechend zueinander verschoben.

In diesem Beispiel ist jedoch die Bestimmung der Referenzposition für die einzelnen Vermessungsdatensätze mit einem statistischen Fehler behaftet. Aus diesem Grund werden die Landmarken 21a, 21b, 21c, 21d, 21e, 21f nicht an ihren tatsächlichen globalen Positionen erfasst. Die in den Figuren 3A bis 3D dargestellte Verschiebung ist aus Klarheitsgründen besonders deutlich dargestellt. Gleichzeitig ist jedoch anhand der erfassten Vermessungsdatensätze die räumliche Korrelation zwischen den Landmarken 21a, 21b, 21c, 21d, 21e, 21f mit hoher Genauigkeit bestimmbar, sodass diese Unsicherheit in den Figuren 3A bis 3D vernachlässigt wird.

Beispielsweise werden bei dem in Figur 3A gezeigten Fall die Landmarken "A","B" und "C" (21a, 21b, 21c) im Erfassungsraum 20a erfasst. Die bestimmten Relativpositionen 22a, 22b, 22c relativ zu dem mit einem Messfehler behafteten Relativpunkt sind gegenüber den tatsächlichen Positionen der Landmarken "A","B" und "C" (21a, 21b, 21c) verschoben. Die mit gestrichelten Linien dargestellten räumlichen Korrelationen sind dabei jedoch mit hoher Genauigkeit erfasst.

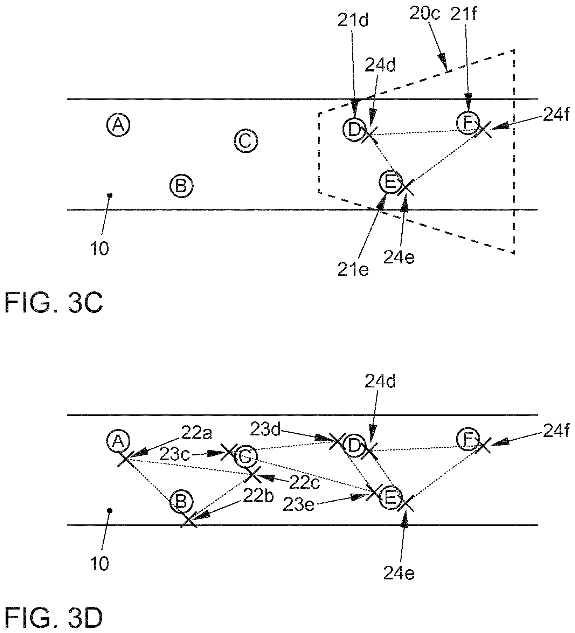

Analog dazu zeigen die Figuren 3B und 3C die Erfassung von Daten und die Bestimmung von Relativpositionen 23c, 23d, 23e, 24d, 24e, 24f in den weiteren Erfassungsräumen 20b und 20c.

Mittels der Ausgleichungseinheit 6 werden die erfassten Relativpositionen 22a, 22b, 22c, 23c, 23d, 23e, 24d, 24e, 24f kombiniert, wie in Figur 3D schematisch dargestellt. Ferner sind hier zur besseren Verständlichkeit die Landmarken 21a, 21b, 21c, 21d, 21e, 21f dargestellt. Es ist nun die Aufgabe der Ausgleichungseinheit 6, globale Positionen der Landmarken 21a, 21b, 21c, 21d, 21e, 21f so zu bestimmen, dass sie möglichst genau den realen geographischen Positionen der Landmarken 21a, 21b, 21c, 21d, 21e, 21f entsprechen. Dazu wird eine Ausgleichungsrechnung durchgeführt, wobei die räumlichen Korrelationen als Nebenbedingungen eingeführt werden. Insbesondere sind die räumlichen Korrelationen erhaltene Größen (constraints) bei der Ausgleichungsrechnung.

Zum Verständnis des Ausführungsbeispiels wird zunächst ein Modell der Ausgleichungsrechnung nach bekannter Art beschrieben und anschließend die Erweiterung durch das erfindungsgemäße Verfahren erläutert.

Die bestimmten Relativpositionen 22a, 22b, 22c, 23c, 23d, 23e, 24d, 24e, 24f der Landmarken 21a, 21b, 21c, 21d, 21e, 21f sind behaftet mit der Ungenauigkeit bei der Bestimmung der bestimmten Referenzposition, in diesem Beispiel der Fahrzeugposition, und Ungenauigkeiten der Detektion, also etwa der Erfassungseinheit 2, der Detektionseinheit 3 und der Recheneinheit 4, also beispielsweise bei einer Bildverarbeitung und Kalibration. Dabei ist die Ungenauigkeit der Detektion wesentlich kleiner als die zusätzliche Ungenauigkeit der Bestimmung der bestimmten Referenzposition, etwa mittels eines GPS-Moduls. Es werden also Relativpositionen 22a, 22b, 22c, 23c, 23d, 23e, 24d, 24e, 24f bestimmt, welche jede Landmarke 21a, 21b, 21c, 21d, 21e, 21f entsprechend der Anzahl ihrer Detektionen umfasst.

Die Varianzen jeder einzelnen bestimmten Relativposition 22a, 22b, 22c, 23c, 23d, 23e, 24d, 24e, 24f können durch Varianzfortpflanzung ermittelt werden. Um nun die globale Position einer Landmarke 21a, 21b, 21c, 21d, 21e, 21f, die mehrere Mal detektiert wurde, zu ermitteln, greift die Geodäsie oft zur "Methode der kleinsten Quadrate". Beispielsweise kann ein Modell mit einem linearen funktionalen Zusammenhang verwendet werden. Dazu werden die Detektionen zunächst miteinander assoziiert, wobei bestimmt wird, welche der bestimmten Relativpositionen 22a, 22b, 22c, 23c, 23d, 23e, 24d, 24e, 24f welcher Landmarke 21a, 21b, 21c, 21d, 21e, 21f zugeordnet ist. Dazu können an sich bekannte Verfahren verwendet werden. Nachfolgend wird an einem einfachen Modell, in dem der funktionale Zusammenhang zwischen Beobachtung und den zu schätzenden Parametern linear ist, die Ausgleichungsrechnung für das dargestellte Ausführungsbeispiel konstruiert. Dafür wird im Rahmen der Ausgleichungsrechnung gemäß der Methode der kleinsten Quadrate zunächst ein Beobachtungsvektor 1 aufgestellt, der hier aus den X- und Y-Koordinaten der bestimmten Relativpositionen 22a, 22b, 22c, 23c, 23d, 23e, 24d, 24e, 24f besteht. Des Weiteren beschreiben $\hat{X}$ den unbekannten Parametervektor (die optimalen Positionen), A die Designmatrix und P die Gewichtsmatrix (Inverse der Kovarianzmatrix $\sum ll$):

$$\hat{x} = \begin{bmatrix} \hat{X}_{21a} \\ \hat{Y}_{21a} \\ \hat{X}_{21b} \\ \hat{Y}_{21b} \\ \vdots \end{bmatrix}, \qquad l = \begin{bmatrix} l_1 \\ l_2 \\ l_3 \\ l_4 \\ l_5 \\ l_6 \\ l_7 \\ \vdots \\ l_n \end{bmatrix} = \begin{bmatrix} X_{20a,21a} \\ Y_{20a,21a} \\ X_{20a,21b} \\ Y_{20a,21b} \\ X_{20a,21c} \\ Y_{20a,21c} \\ X_{20b,21c} \\ Y_{20b,21c} \\ \vdots \end{bmatrix},$$

$$A = \begin{bmatrix} 1 & 0 & 0 & 0 & 0 & 0 & \dots \\ 0 & 1 & 0 & 0 & 0 & 0 & \dots \\ 0 & 0 & 1 & 0 & 0 & 0 & \dots \\ 0 & 0 & 0 & 1 & 0 & 0 & \dots \\ 0 & 0 & 0 & 0 & 1 & 0 & \dots \\ 0 & 0 & 0 & 0 & 0 & 1 & \dots \\ 0 & 0 & 0 & 0 & 1 & 0 & \dots \\ 0 & 0 & 0 & 0 & 0 & 1 & \dots \\ \vdots & \vdots & \vdots & \vdots & \vdots & \vdots & \ddots \end{bmatrix},$$

$$P = \Sigma_{ll}^{-1}$$

Das Ausgleichungsmodell für die Berechnung der globalen Positionen für einen linearen funktionalen Zusammenhang in diesem Beispiel lautet damit:

$$\hat{x} = (A^T P A)^{-1} A^T P l$$

Auf diese Weise wird für jede Landmarke 21a, 21b, 21c, 21d, 21e, 21f eine Ausgleichung so durchgeführt, dass die mehreren bestimmten Relativpositionen 22a, 22b, 22c, 23c, 23d, 23e, 24d, 24e, 24f für jede einzelne Landmarke 21a, 21b, 21c, 21 d, 21e, 21f korrigiert wird.

Erfindungsgemäß wird dieses Verfahren nun so modifiziert, dass die zuvor bestimmten räumlichen Korrelationen als weitere Randbedingungen eingeführt werden, um die Struktur der Landmarken 21a, 21b, 21c, 21d, 21e, 21f zueinander zu erhalten. Die Ausgleichungsrechnung bietet verschiedene Methoden, um Bedingungen in die Berechnungen einfließen zu lassen. Das Vorgehen, in der Ausgleichungsrechnung die räumlichen Korrelationen einzuhalten, kann auf mehrere verschiedene Wege geschehen, etwa anhand eines Gauss-Markov- oder Gauss-Helmert-Modells. Für das Ausführungsbeispiel wird nachfolgend eine der einfacheren geeigneten Methoden beispielhaft erläutert (Niemeier, Wolfgang (2008): Ausgleichungsrechnung. 2. Auflage. Berlin: de Gruyter), wobei die beobachteten Distanzen zwischen den Landmarken einer Messepoche als fiktive Beobachtungen einfließen. In weiteren Ausführungsbeispielen können andere an sich bekannte Methoden verwendet werden, um die räumlichen Randbedingungen in der Optimierung zu berücksichtigen.

In dem Ausführungsbeispiel wird das oben beschriebene lineare Modell folgendermaßen erweitert:

$$l_{erweitert} = \begin{bmatrix} l \\ l_B \end{bmatrix},$$

$$\mathbf{A}_{erweitert} = \begin{bmatrix} \mathbf{A} \\ \mathbf{A}_B \end{bmatrix},$$

$$\Sigma_{erweitert} = \begin{bmatrix} \Sigma_{ll} & \mathbf{0} \\ \mathbf{0} & \Sigma_{l_B l_B} \end{bmatrix},$$

wobei

$$l_B = \begin{bmatrix} l_{B1} \\ l_{B2} \\ l_{B3} \\ l_{B4} \\ l_{B5} \\ l_{B6} \\ l_{B7} \\ \vdots \\ l_{Bn} \end{bmatrix} = \begin{bmatrix} \Delta X_{20a,21a}^{20a,21b} \\ \Delta Y_{20a,21a}^{20a,21b} \\ \Delta X_{20a,21b}^{20a,21c} \\ \Delta Y_{20a,21b}^{20a,21c} \\ \Delta X_{20a,21a}^{20a,21c} \\ \Delta Y_{20a,21a}^{20a,21c} \\ \Delta X_{20b,21c}^{20b,21d} \\ \Delta Y_{20b,21c}^{20b,21d} \\ \vdots \end{bmatrix},$$

$$\mathbf{A} = \begin{bmatrix} -1 & 0 & 1 & 0 & 0 & 0 & \dots \\ 0 & -1 & 0 & 1 & 0 & 0 & \dots \\ 0 & 0 & -1 & 0 & 1 & 0 & \dots \\ 0 & 0 & 0 & -1 & 0 & 1 & \dots \\ -1 & 0 & 0 & 0 & 1 & 0 & \dots \\ 0 & -1 & 0 & 0 & 0 & 1 & \dots \\ 0 & 0 & 0 & 0 & -1 & 0 & \dots \\ 0 & 0 & 0 & 0 & 0 & -1 & \dots \\ \vdots & \vdots & \vdots & \vdots & \vdots & \vdots & \ddots \end{bmatrix},$$

$$\mathbf{P} = \Sigma_{ll}^{-1}.$$

Die oben angeführte Berechnung der globalen Positionen bleibt formelmäßig bestehen:

$$\hat{x} = (\mathbf{A}^T \mathbf{P} \mathbf{A})^{-1} \mathbf{A}^T \mathbf{P} l$$

Anschaulich werden durch das erfindungsgemäße Verfahren Unsicherheiten der bestimmten Relativpositionen 22a, 22b, 22c, 23c, 23d, 23e, 24d, 24e, 24f korrigiert, indem anhand mehrerer zu einer Landmarke 21a, 21b, 21c, 21d, 21e, 21f gehöriger Relativpositionen 22a, 22b, 22c, 23c, 23d, 23e, 24d, 24e, 24f eine optimale globale Position für die Landmarke 21a, 21b, 21c, 21d, 21e, 21f bestimmt wird. Dabei wird jedoch berücksichtigt, dass die räumlichen Korrelationen zwischen den bestimmten Relativpositionen 22a, 22b, 22c, 23c, 23d, 23e, 24d, 24e, 24f als Randbedingungen erhalten bleiben sollen oder nur möglichst geringe Abweichungen zugelassen sind.

Bei dem in Figur 3D dargestellten Beispiel würde dies etwa dazu führen, dass die bestimmten Relativpositionen 22a, 22b, 22c, 23c, 23d, 23e, 24d, 24e, 24f verschoben werden, wobei durch die räumlichen Korrelationen "zusammenhängende" Relativpositionen 22a, 22b, 22c, 23c, 23d, 23e, 24d, 24e, 24f im Wesentlichen gemeinsam verschoben werden.

In weiteren Ausführungsbeispielen werden die von dem Fahrzeug 1 erfassten Vermessungsdatensätze, insbesondere zusammen mit den erfassten Positionen des Fahrzeugs 1 oder mit den Daten des GPS-Moduls der Erfassungseinheit 2, an eine externe Einrichtung übertragen und dort verarbeitet. Dabei können auch die Recheneinheit 4, die Detektionseinheit 3, die Korrelationseinheit 5 und/oder die Ausgleichseinheit 6 von der externen Einrichtung umfasst sein. Die externe Einrichtung kann beispielsweise ein Server oder eine Rechenvorrichtung sein.

Anhand der bestimmten globalen Positionen können Kartendaten erzeugt oder aktualisiert werden. Dies kann anhand einer Einrichtung des Fahrzeugs 1 oder mittels einer externen Einrichtung, etwa eines Servers erfolgen. Diese Kartendaten können an ein weiteres Fahrzeug übertragen werden, das dann anhand der Kartendaten mit den globalen Positionen der Landmarken 21a, 21b, 21c, 21d, 21e, 21f seine eigene Position auf der Fahrbahn 10 bestimmen kann. Dabei können die Kartendaten von dem Fahrzeug 1 selbst gespeichert werden oder sie können bei Bedarf an der Fahrzeug 1 übertragen werden, etwa auf eine Anfrage des Fahrzeugs 1 hin von einem externen Server.

**Bezugszeichenliste**

| | |
|---|---|
| 1 | Fahrzeug |
| 2 | Erfassungseinheit |
| 3 | Detektionseinheit |
| 4 | Recheneinheit |
| 5 | Korrelationseinheit |
| 6 | Ausgleichungseinheit |
| 7 | Fahrbahnmarkierungen |
| 8 | Pfosten; Leitpfosten |
| 10 | Fahrbahn |
| 20a, 20b, 20c | Erfassungsräume |
| 21a, 21b, 21c, 21d, 21e, 21f | Landmarken A, B, C, D, E, F (tatsächliche globale Positionen) |
| 22a, 22b, 22c | Erste Relativpositionen |
| 23c, 23d, 23e | Zweite Relativpositionen |
| 24d, 24e, 24f | Dritte Relativpositionen |

**Patentansprüche**

1. Verfahren zum Bestimmen einer globalen Position einer ersten Landmarke (21c), wobei

zumindest ein erster und ein zweiter Vermessungsdatensatz erfasst werden, wobei
dem ersten Vermessungsdatensatz ein erster Referenzpunkt und ein erster Erfassungsraum (20a) sowie dem zweiten Vermessungsdatensatz ein zweiter Referenzpunkt und ein zweiter Erfassungsraum (20b) zugeordnet sind, wobei
die Referenzpunkte der Vermessungsdatensätze mittels eines satellitengestützten Positionsbestimmungsverfahrens erfasst werden,
die erste Landmarke (21c) in dem ersten (20a) und zweiten Erfassungsraum (20b) detektiert wird sowie eine zweite Landmarke (21a, 21b) in dem ersten Erfassungsraum (20a) detektiert wird,
anhand des ersten Vermessungsdatensatzes erste Relativpositionen (22a, 22b, 22c) der ersten (21c) und der zweiten Landmarke (21a, 21b) relativ zu dem Referenzpunkt des ersten Erfassungsraums (20a) bestimmt werden, und
anhand des zweiten Vermessungsdatensatzes eine zweite Relativposition (23c) der ersten Landmarke (21c) relativ zu dem Referenzpunkt des zweiten Erfassungsraums (20b) bestimmt wird,
anhand des ersten Vermessungsdatensatzes eine räumliche Korrelation als Vektor zwischen den bestimmten ersten Relativpositionen (22a, 22b, 22c) der ersten (21c) und zweiten Landmarke (21a, 21b) zueinander bestimmt wird, und
anhand der bestimmten ersten (22c) und zweiten Relativposition (23c) der ersten Landmarke (21c), anhand der bestimmten ersten Relativposition (22a, 22b) der zweiten Landmarke (21a, 21b) und anhand der bestimmten räumlichen Korrelation die globale Position der ersten Landmarke (21c) bezüglich eines globalen Referenzpunktes bestimmt wird, wobei
die globale Position der ersten Landmarke (21c) mittels einer Ausgleichsrechnung bestimmt wird und
die bestimmte räumliche Korrelation als Randbedingung für die Ausgleichsrechnung verwendet wird.

2. Verfahren nach Anspruch 1, wobei die Landmarken (21a, 21b, 21c, 21d, 21e, 21f) eine Fahrbahnmarkierung (7), einen Pfosten (8) und/oder eine Kante umfassen.

3. Verfahren nach Anspruch 1 oder 2,

wobei jedem Vermessungsdatensatz jeweils ein Zeitpunkt zugeordnet ist.

4. Verfahren nach einem der vorhergehenden Ansprüche,
wobei eine Vielzahl von Vermessungsdatensätzen in zeitlicher Folge erfasst wird, wobei die den Vermessungsdatensätzen zugeordneten Erfassungsräume (20a, 20b, 20c) entlang einer Trajektorie zueinander verschoben sind.

5. Verfahren nach einem der vorhergehenden Ansprüche,
wobei die Vermessungsdatensätze Abstandsinformationen und/oder Bilddaten umfassen.

6. Verfahren nach einem der vorhergehenden Ansprüche,
wobei der globale Referenzpunkt eine Position eines Ortes der Erdoberfläche ist.

7. Verfahren nach einem der vorhergehenden Ansprüche,
wobei anhand der bestimmten globalen Position Kartendaten erzeugt oder aktualisiert werden.

8. Verfahren nach einem der vorhergehenden Ansprüche,
wobei die bestimmte räumliche Korrelation einen Abstand und/oder einen Winkel umfasst.

9. Verfahren nach einem der vorhergehenden Ansprüche
wobei mittels der Ausgleichungsrechnung ferner eine zweite globale Position für die zweite Landmarke (21a, 21b) bestimmt wird.

10. System zum Bestimmen einer globalen Position einer ersten Landmarke (21c), mit

einer Erfassungseinheit (2), durch die zumindest ein erster und ein zweiter Vermessungsdatensatz erfassbar sind, wobei dem ersten Vermessungsdatensatz ein erster Referenzpunkt und ein erster Erfassungsraum (20a) sowie dem zweiten Vermessungsdatensatz ein zweiter Referenzpunkt und ein zweiter Erfassungsraum (20b) zugeordnet sind, wobei
die Referenzpunkte der Vermessungsdatensätze mittels eines satellitengestützten Positionsbestimmungsverfahrens erfassbar sind,
einer Detektionseinheit (3), durch welche die erste Landmarke (21c) in dem ersten (20a) und zweiten Erfassungsraum (20b) sowie eine zweite Landmarke (21a, 21b) in dem ersten Erfassungsraum (20a) detektierbar ist,
einer Recheneinheit (4), durch die anhand des ersten Vermessungsdatensatzes erste Relativpositionen (22a, 22b, 22c) der ersten (21c) und der zweiten Landmarke (21a, 21b) relativ zu dem Referenzpunkt des ersten Erfassungsraums (20a) bestimmbar sind, und anhand des zweiten Vermessungsdatensatzes eine zweite Relativposition (23c) der ersten Landmarke (21c) relativ zu dem Referenzpunkt des zweiten Erfassungsraums (20b) bestimmbar ist,
einer Korrelationseinheit (5), durch die anhand des ersten Vermessungsdatensatzes eine räumliche Korrelation als Vektor zwischen den bestimmten ersten Relativpositionen (22a, 22b, 22c) der ersten (21c) und zweiten Landmarke (21a, 21b) zueinander bestimmbar ist, und
einer Ausgleichungseinheit (6), durch die anhand der bestimmten ersten (22c) und zweiten Relativposition (23c) der ersten Landmarke (21c), anhand der bestimmten ersten Relativposition (22a, 22b) der zweiten Landmarke (21a, 21b) und anhand der bestimmten räumlichen Korrelation die globale Position der ersten Landmarke (21c) bezüglich eines globalen Referenzpunktes bestimmbar ist, wobei
die Ausgleichungseinheit (6) dazu eingerichtet ist, die globale Position der ersten Landmarke (21c) mittels einer Ausgleichungsrechnung zu bestimmen und
die bestimmte räumliche Korrelation als Randbedingung für die Ausgleichsrechnung zu verwenden.

11. System nach Anspruch 10,
wobei die Erfassungseinheit (2) eine *Time-of-Flight*-Kamera, eine Monokamera, eine Stereokamera, eine Lidar-Vorrichtung und/oder eine Radar-Vorrichtung umfasst.

12. System nach Anspruch 10 oder 11,
wobei das System von einem Fahrzeug (1) umfasst ist, wobei
für jeden Vermessungsdatensatz ferner jeweils eine Position des Fahrzeugs (1) erfassbar ist und
die jeweilige erfasste Position des Fahrzeugs (1) dem jeweiligen Vermessungsdatensatz als Referenzpunkt zugeordnet ist.

**Claims**

1.  Method for determining a global position of a first landmark (21c), wherein at least a first and a second measuring data set are acquired, wherein the first measuring data set is assigned a first reference point and a first sensing area (20a), and the second measuring data set is assigned a second reference point and a second sensing area (20b), wherein
    the reference points of the measuring data sets are acquired by means of a satellite-based position-determining method,
    the first landmark (21c) is detected in the first sensing area (20a) and the second sensing area (20b), and a second landmark (21a, 21b) is detected in the first sensing area (20a),
    first relative positions (22a, 22b, 22c) of the first landmark (21c) and of the second landmark (21a, 21b) relative to the reference point of the first sensing area (20a) are determined on the basis of the first measuring data set, and a second relative position (23c) of the first landmark (21c) relative to the reference point of the second sensing area (20b) is determined on the basis of the second measuring data set,
    a spatial correlation is determined as a vector between the determined first relative positions (22a, 22b, 22c) of the first landmark (21c) and of the second landmark (21a, 21b) with respect to one another on the basis of the first measuring data set, and
    the global position of the first landmark (21c) with respect to a global reference point is determined on the basis of the determined first relative position (22c) and second relative position (23c) of the first landmark (21c), on the basis of the determined first relative position (22a, 22b) of the second landmark (21a, 21b) and on the basis of the determined spatial correlation, wherein
    the global position of the first landmark (21c) is determined by means of a compensation calculation, and
    the determined spatial correlation is used as a boundary condition for the compensation calculation.

2.  Method according to Claim 1,
    wherein
    the landmarks (21a, 21b, 21c, 21d, 21e, 21f) comprise a roadway marking (7), a pillar (8) and/or an edge.

3.  Method according to Claim 1 or 2,
    wherein
    each measuring data set is respectively assigned a time.

4.  Method according to one of the preceding claims, wherein
    a multiplicity of measuring data sets is acquired in a chronological succession, wherein the sensing areas (20a, 20b, 20c) which are assigned to the measuring data sets are shifted with respect to one another along a trajectory.

5.  Method according to one of the preceding claims, wherein
    the measuring data sets comprise distance information and/or image data.

6.  Method according to one of the preceding claims,
    wherein
    the global reference point is a position of a location on the earth's surface.

7.  Method according to one of the preceding claims,
    wherein
    map data is generated or updated on the basis of the determined global position.

8.  Method according to one of the preceding claims,
    wherein
    the determined spatial correlation comprises a distance and/or an angle.

9.  Method according to one of the preceding claims, wherein,
    in addition, a second global position for the second landmark (21a, 21b) is determined by means of the compensation calculation.

10. System for determining a global position of a first landmark (21c), having
    a sensing unit (2), by means of which at least a first and a second measuring data set can be acquired, wherein the first measuring data set is assigned a first reference point and a first sensing area (20a), and the second measuring data set is assigned a second reference point and a second sensing area (20b), wherein

the reference points of the measuring data sets can be acquired by means of a satellite-based position-determining method,

a detection unit (3), by means of which the first landmark (21c) can be detected in the first sensing area (20a) and second sensing area (20b), and a second landmark (21a, 21b) can be detected in the first sensing area (20a),

a computing unit (4), by means of which first relative positions (22a, 22b, 22c) of the first landmark (21c) and of the second landmark (21a, 21b) relative to the reference point of the first sensing area (20a) can be determined on the basis of the first measuring data set, and a second relative position (23c) of the first landmark (21c) relative to the reference point of the second sensing area (20b) can be determined on the basis of the second measuring data set,

a correlation unit (5), by means of which a spatial correlation can be determined as a vector between the determined first relative positions (22a, 22b, 22c) of the first landmark (21c) and second landmark (21a, 21b) with respect to one another on the basis of the first measuring data set, and

a compensation unit (6), by means of which the global position of the first landmark (21c) with respect to a global reference point can be determined on the basis of the determined first relative position (22c) and second relative position (23c) of the first landmark (21c), on the basis of the determined first relative position (22a, 22b) of the second landmark (21a, 21b) and on the basis of the determined spatial correlation, wherein

the compensation unit (6) is configured to determine the global position of the first landmark (21c) by means of a compensation calculation and

to use the determined spatial correlation as a boundary condition for the compensation calculation.

11. System according to Claim 10,
wherein
the sensing unit (2) comprises a *time-of-flight* camera, a mono-camera, a stereo-camera, a lidar device and/or a radar device.

12. System according to Claim 10 or 11,
wherein
the system is included in a vehicle (1), wherein, in addition, in each case, a position of the vehicle (1) can be sensed for each measuring data set, and
the respective sensed position of the vehicle (1) is assigned to the respective measuring data set as a reference point.


**Revendications**

1. Procédé de détermination d'une position globale d'un premier point de repère (21c),
au moins un premier et un deuxième jeu de données de mesurage étant acquis,
un premier point de référence et un premier espace d'acquisition (20a) étant associés au premier jeu de données de mesurage ainsi qu'un deuxième point de référence et un deuxième espace d'acquisition (20b) étant associés au deuxième jeu de données de mesurage,
les points de référence des jeux de données de mesurage étant acquis au moyen d'un procédé de détermination de position par satellite,
le premier point de repère (21c) étant détecté dans le premier (20a) et le deuxième espace d'acquisition (20b) et aussi un deuxième point de repère (21a, 21b) étant détecté dans le premier espace d'acquisition (20a),
des premières positions relatives (22a, 22b, 22c) du premier (21c) et du deuxième point de repère (21a, 21b) étant déterminées par rapport au point de référence du premier espace d'acquisition (20a) à l'aide du premier jeu de données de mesurage, et
une deuxième position relative (23c) du premier point de repère (21c) étant déterminée par rapport au point de référence du deuxième espace d'acquisition (20b) à l'aide du deuxième jeu de données de mesurage,
une corrélation dans l'espace sous la forme d'un vecteur entre les premières positions relatives (22a, 22b, 22c) déterminées du premier (21c) et du deuxième point de repère (21a, 21b) les unes par rapport aux autres étant déterminée à l'aide du premier jeu de données de mesurage, et
la position globale du premier point de repère (21c) en référence à un point de référence global étant déterminée à l'aide de la première (22c) et de la deuxième position relative (23c) déterminées du premier point de repère (21c), à l'aide de la première position relative (22a, 22b) déterminée du deuxième point de repère (21a, 21b) et à l'aide de la corrélation dans l'espace déterminée, la position globale du premier point de repère (21c) étant déterminée au moyen d'un calcul de compensation et la corrélation dans l'espace déterminée étant utilisée comme condition aux limites pour le calcul de compensation.

**2.** Procédé selon la revendication 1, les points de repère (21a, 21b, 21c, 21d, 21e, 21f) comprenant un marquage de voie de circulation (7), un poteau (8) et/ou un bord.

**3.** Procédé selon la revendication 1 ou 2, un instant étant respectivement associé à chaque jeu de données de mesurage.

**4.** Procédé selon l'une des revendications précédentes, une pluralité de jeux de données de mesurage étant acquis selon une séquence chronologique, les espaces d'acquisition (20a, 20b, 20c) associés aux jeux de données de mesurage étant décalés les uns par rapport aux autres le long d'une trajectoire.

**5.** Procédé selon l'une des revendications précédentes, les jeux de données de mesurage comprenant des informations d'écart et/ou des données d'image.

**6.** Procédé selon l'une des revendications précédentes, le point de référence global étant une position d'un lieu à la surface de la Terre.

**7.** Procédé selon l'une des revendications précédentes, des données cartographiques étant générées ou actualisées à l'aide de la position globale déterminée.

**8.** Procédé selon l'une des revendications précédentes, la corrélation dans l'espace déterminée comprenant un écart et/ou un angle.

**9.** Procédé selon l'une des revendications précédentes, une deuxième position globale pour le deuxième point de repère (21a, 21b) étant en plus déterminée au moyen du calcul de compensation.

**10.** Système de détermination d'une position globale d'un premier point de repère (21c), comprenant
une unité d'acquisition (2) par le biais de laquelle peuvent être acquis au moins un premier et un deuxième jeu de données de mesurage, un premier point de référence et un premier espace d'acquisition (20a) étant associés au premier jeu de données de mesurage ainsi qu'un deuxième point de référence et un deuxième espace d'acquisition (20b) étant associés au deuxième jeu de données de mesurage,
les points de référence des jeux de données de mesurage pouvant être acquis au moyen d'un procédé de détermination de position par satellite,
une unité de détection (3), par le biais de laquelle peut être détecté le premier point de repère (21c) dans le premier (20a) et le deuxième espace d'acquisition (20b) et aussi un deuxième point de repère (21a, 21b) dans le premier espace d'acquisition (20a),
une unité de calcul (4), par le biais de laquelle des premières positions relatives (22a, 22b, 22c) du premier (21c) et du deuxième point de repère (21a, 21b) peuvent être déterminées par rapport au point de référence du premier espace d'acquisition (20a) à l'aide du premier jeu de données de mesurage, et une deuxième position relative (23c) du premier point de repère (21c) peut être déterminée par rapport au point de référence du deuxième espace d'acquisition (20b) à l'aide du deuxième jeu de données de mesurage,
une unité de corrélation (5), par le biais de laquelle une corrélation dans l'espace sous la forme d'un vecteur entre les premières positions relatives (22a, 22b, 22c) déterminées du premier (21c) et du deuxième point de repère (21a, 21b) les unes par rapport aux autres peut être déterminée à l'aide du premier jeu de données de mesurage, et
une unité de compensation (6), par le biais de laquelle la position globale du premier point de repère (21c) en référence à un point de référence global peut être déterminée à l'aide de la première (22c) et de la deuxième position relative (23c) déterminées du premier point de repère (21c), à l'aide de la première position relative (22a, 22b) déterminée du deuxième point de repère (21a, 21b) et à l'aide de la corrélation dans l'espace déterminée,
l'unité de compensation (6) étant conçue pour déterminer la position globale du premier point de repère (21c) au moyen d'un calcul de compensation et
pour utiliser la corrélation dans l'espace déterminée comme condition aux limites pour le calcul de compensation.

**11.** Système selon la revendication 10, l'unité d'acquisition (2) comprenant une caméra à temps de vol, une caméra monoscopique, une caméra stéréoscopique, un dispositif lidar et/ou un dispositif radar.

**12.** Système selon la revendication 10 ou 11,
le système étant compris par un véhicule (1),
une position du véhicule (1) pouvant respectivement être acquise pour chaque jeu de données de mesurage et
la position respectivement acquise du véhicule (1) étant associée au jeu de données de mesurage respectif en tant que point de référence.

FIG. 1

FIG. 2A

FIG. 2B

FIG. 2C

FIG. 2D

FIG. 2E

FIG. 3A

FIG. 3B

FIG. 3C

FIG. 3D

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004003850 A1
- DE 102007020791 A1
- DE 102012208974 A1

**In der Beschreibung aufgeführte Nicht-Patentliteratur**

- **NIEMEIER ; WOLFGANG.** Ausgleichungsrechnung. de Gruyter, 2008